# EUROPEAN PATENT SPECIFICATION

(11) **EP 4 570 413 B1**
(45) Date of publication and mention of the grant of the patent: **19.08.2026**
(21) Application number: 24216160.2
(22) Date of filing: 28.11.2024
(51) Int. Cl.: B23K 9/167, B23K 9/28, B23K 9/29, B23K 9/32

(54) **WELDING TORCHE HAVING DUAL POWER CABLES**
SCHWEISSBRENNER MIT ZWEI STROMKABELN
TORCHE DE SOUDAGE AYANT DEUX CÂBLES D'ALIMENTATION

(30) Priority: 28.11.2023 US 202363603249 P; 25.11.2024 US 202418958290
(43) Date of publication of application: 18.06.2025
(73) Proprietor: Illinois Tool Works Inc., Glenview IL 60025 (US)
(72) Inventor: HOEGER, Michael, Glenview, 60025 (US)
(74) Representative: HGF

(56) References cited:
- US-A- 2 922 868
- US-A- 3 030 490
- US-A- 6 005 221

## Description

This present invention relates generally to welding torches and, more particularly, to a welding torch having power cables.

### BACKGROUND

In a conventional water-cooled gas tungsten arc welding (GTAW) torch, three hoses connect the power supply and cooler to the welding torch. The gas hose ports provide shielding gas from the power supply to the torch in order to shield the consumables, welding arc, and the weld puddle. A coolant line routes coolant to the torch from the cooler. Finally, the power cable routes welding current to the torch and provides a return path for the coolant. US3030490A (describing the preamble of claim 1) relates to a multiple purpose arc torch apparatus. US2922868A relates to a gas shielded internally cooled electrode welding torch. US6005221A relates to a pressurized air cooled tungsten inert gas welding apparatus.

### SUMMARY

According to the present invention, a welding torch is defined in claim 1.

Further preferred embodiments of the welding torch according to the present invention are defined in the dependent claims.

### BRIEF DESCRIPTION OF THE DRAWINGS

FIG. 1 illustrates an example welding-type system.
FIG. 2 is a perspective view of an example welding torch of the welding-type system of FIG. 1.
FIG. 3A is a partially transparent perspective view of the example welding torch of FIG. 1.
FIG. 3B is a second transparent perspective view of the connection of FIG. 2.
FIG. 4 is a detailed cross-section of an example cross-section of FIG. 2.
FIG. 5 is a second detailed cross-section of an example cross-section of FIG. 2.

The figures are not necessarily to scale. Where appropriate, similar or identical reference numbers are used to refer to similar or identical components.

### DETAILED DESCRIPTION

For the purpose of promoting an understanding of the principles of the present invention, reference will be now made to the examples illustrated in the drawings and specific language will be used to describe the same. It will nevertheless be understood that no limitation of the scope of the claims is intended by this disclosure. Modifications in the illustrated examples and such further applications of the principles of the present invention as illustrated therein are contemplated as would typically occur to one skilled in the art to which this disclosure relates.

In conventional welding torches, a large portion of the weight of the cabling to the welding torch is contributed by the insulated tubing that encloses the power cable and the coolant, and by the coolant itself. In disclosed examples, dual power cables are placed at a center of the tubing and contribute minimally to the overall weight and cable stiffness, leading to an overall system weight and stiffness that is less than conventional welding torches with similar ampacity rating. A lower overall weight and stiffness yields an overall higher ampacity-bending stiffness ratio. Additionally, having dual power cables increases the conductive cross-section, which reduces overall cable resistance, thereby allowing better arc starting and reduced loss at a high frequency since the inductance and skin effect (resistance) are reduced.

In disclosed examples, the dual power cable reduces the voltage gradient across the cross-section (diameter) of the power cable. The lower voltage gradient can mitigate dielectric breakdown of the tubing insulation material. Additionally, the reduced voltage gradient will reduce the corona discharge around the cable, which can reduce the production of free radicals, ozone, and UV radiation which can damage the tubing insulation material.

In disclosed examples, the dual power cable may be used for air cooled and water cooled applications, thus consolidating usage and reduce number of parts and/or stock keeping units (SKU) necessary. Air cooled applications may include any gas cooling (e.g., shielding gas cooling), and water cooled applications may include any fluid cooling, such as, for example, ethylene glycol or propylene glycol. In disclosed examples, a user may easily upgrade to a water cooled system without replacing the welding torch.

In disclosed examples, cable cooling performance is also improved, thereby resulting in a cooler conductor. Because a greater surface area of the dual power cable is exposed to coolant, the Biot number (i.e., the ratio of thermal resistance for conduction inside the power cable to resistance for convection at the power cable surface) is increased due to the increase in convective heat transfer relative to the internal thermal conductivity of the body. As a result, disclosed example power cables have a more evenly distributed and cooler temperature. This cooler power cable will have a lower resistance because the conductivity of conductors are greater at lower temperatures.

As used herein, the word "exemplary" means "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

Disclosed example welding torches include a torch head and a handle. **The** handle includes a first coolant line configured to conduct coolant to the torch head, a second coolant line configured to conduct the coolant away from the torch head, a first welding power conductor within the first coolant line, and a second welding power conductor within the second coolant line. In some examples, the first and second welding power conductors configured to carry electric current to the torch head. In some examples, the first and second welding power conductors conduct welding-type current in parallel. In some examples, the first and second coolant lines pass through the torch head in thermal and electrical connection with the torch head. In some examples, the first and second coolant lines are fluidly and electrically coupled to the torch head to form a coolant path for the torch head. In some examples, the first and second coolant lines wrap around the torch head in thermal and electrical connection with the torch head.

In some examples, the coolant in the first coolant line substantially surrounds the first welding power conductor, and the coolant in the second coolant line substantially surrounds the second welding power conductor. In some examples, the first coolant line, the first welding power conductor, the second coolant line, and the second welding power conductor extend from the handle to a power supply, and the coolant provides an annular flow surrounding the first and second welding power conductors to cool the first and second welding power conductors from the power supply to the torch head.

In some examples, the first welding power conductor and the second welding power conductor extend from the handle to a connector, and the coolant provides an annular flow surrounding the first and second welding power conductors to cool the first and second welding power conductors from the connector to the torch head. In some examples, the connector comprises input connections for the first coolant line, the second coolant line, and a welding power cable, and output connections for the first coolant line, the second coolant line, the first welding power conductor, and the second welding power conductor. In some examples, the handle further comprises a gas hose configured to provide shielding gas to the welding torch.

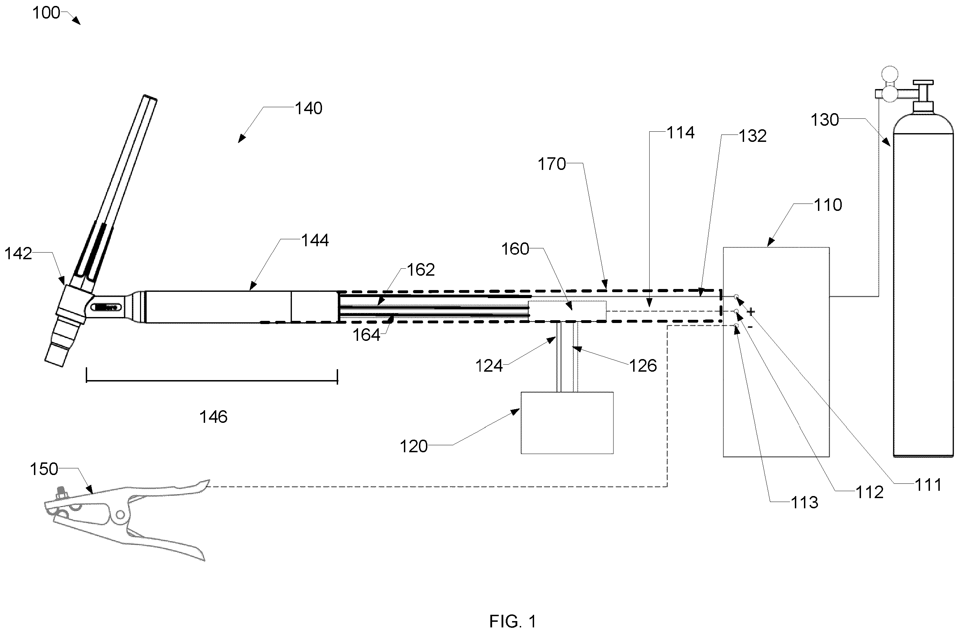

FIG. 1 illustrates an example welding-type system 100 including a welding torch 140. The welding type system 100 includes a power supply 110 for delivery of welding power, a cooler 120 to provide coolant, a gas source 130 for delivery of shielding gas, a welding torch 140, and a ground clamp 150. The welding torch 140 includes a torch head 142 and a torch handle 144 through which shielding gas, electric current, and coolant flow to the torch head 142.

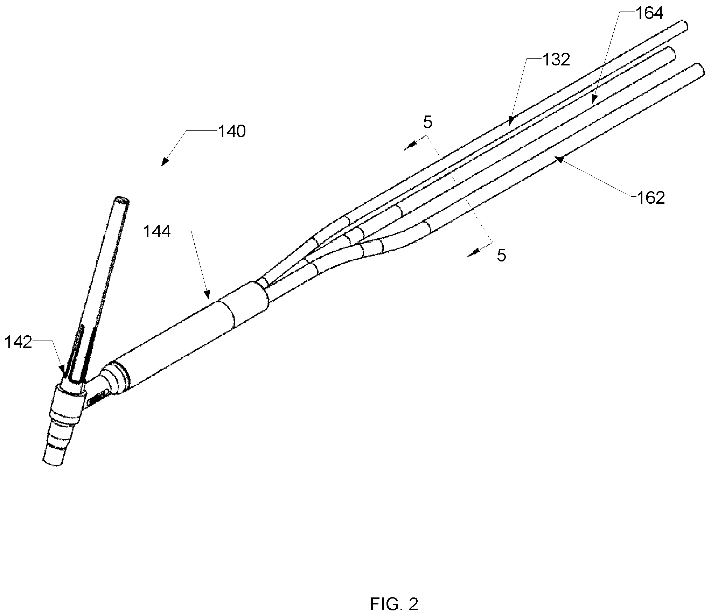

In the illustrated example, the power supply 110 is configured to supply power to welding operations and/or preheating operations. The power supply 110 includes one or more connections to provide welding power and/or shielding gas to the welding torch 140. In some examples, the power supply 110 provides the welding power and shielding gas via separate connections as illustrated in FIG. 2. For example, a gas connection 111 and power connections 112 and 113 may be provided separately. In some other examples, the one or more connections may be provided via a single connection and/or single welding cable, such as welding cable 170 depicted in FIG. 1.

The power supply 110 receives shielding gas from the gas source 130 to provide to the welding torch 140 via a gas line/hose 132. Shielding gas from the gas source 130 may run through the gas hose 132 which runs through the torch handle 144. A cable 114 may be connected to the power supply 110 to provide electric current to the torch head 142 via a coolant power coolant power connector 160. The power supply 110 forms a complete circuit with a weld piece (not shown) via the power connection 113 to the ground clamp 150 and power connection 112 to the cable 114. In some other examples, the welding cable 170 may include the gas line 132 and cable 114 in order to provide shielding gas and electric current to the torch head 142.

The cooler 120 includes a coolant output 124 and a coolant input 126 that connect to the coolant power connector 160. The coolant output 124 and coolant input 126 are coolant lines that run coolant to and from the coolant power connector 160 into and away from the cooler 120. The coolant power connector 160 may also include an input connection for power (e.g., cable 114, which may be a welding power cable from the power supply 110 to the power connector 160). The coolant power connector 160 may output the power provided from cable 114 via coolant lines 162 and 164.

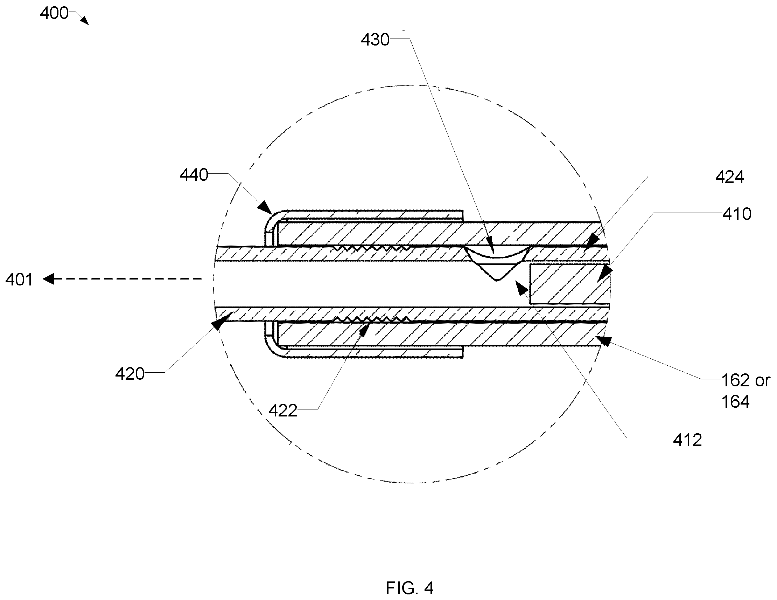

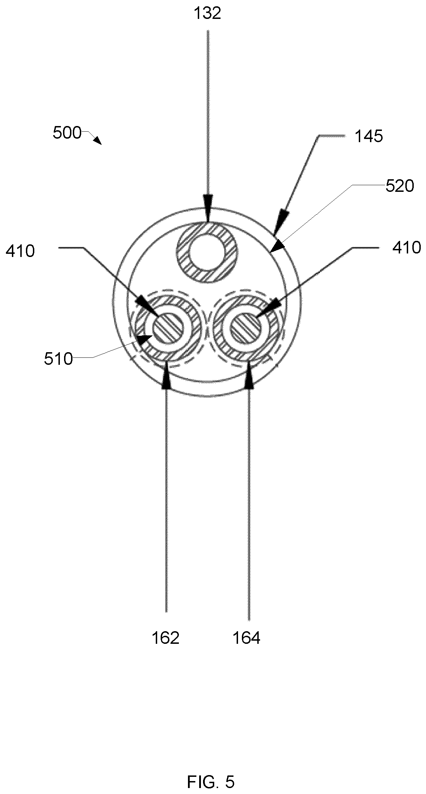

The coolant power connector 160 provides coolant towards the torch head 142 via coolant line 162 and receives coolant from the torch head 142 via coolant line 164. In some other examples, the coolant line 164 provides coolant to the torch head 142 and coolant line 162 provides coolant away from the torch head 142. One or both coolant lines 162 and 164 may also include a welding power conductor (not shown, described further below with regards to FIGs. 4 and 5) that carries electric current from the coolant power connector 160 to the welding torch 140. The coolant may substantially surround the welding power conductors when flowing towards and away from the torch head 142. The coolant lines 162 and 164 may be hoses or other tubing comprised of non-conductive material such as rubber or plastic.

The gas hose 132, coolant lines 162 and 164, and welding power conductors (not shown but described with respect to FIGs. 2-4 below) may run through the torch handle 144. In some examples, the torch handle 144 is a conductive tube constructed with copper or brass, and may be overmolded by a non-conductive material such as thermoplastic (e.g., high temperature grades such as PPS or LCP), elastomers (e.g., silicone or FKM), or thermosetting polymers (e.g., phenolic or epoxy), etc. The example torch head 142 is also constructed with conductive materials such as brass or copper. The torch head 142 conducts the welding power to an electrode, such as a tungsten electrode, for formation of a welding arc. The torch head 142 may include components to hold the tungsten electrode in the torch head 142, such as a collet.

In some examples, the torch head 142 and torch handle 144 may be covered in overmolding materials to form one integral piece. In other examples, the torch head 142 or the torch handle 144 may be covered by a casing or overmolding material. In some examples, the gas line 132, and two coolant lines 162 and 164 run through the torch handle 144 and may be overmolded with the torch handle 144 as one integral piece to form the welding torch 140.

FIG. 2 is a perspective view of an example welding torch 140 of the welding-type system of FIG. 1. The welding torch 140 includes a torch head 142 and a torch handle 144. Coolant lines 162 and 164 run through the torch handle 144 providing coolant toward and away from the torch head 142. Gas line 132 provides shielding gas to the torch head 142.

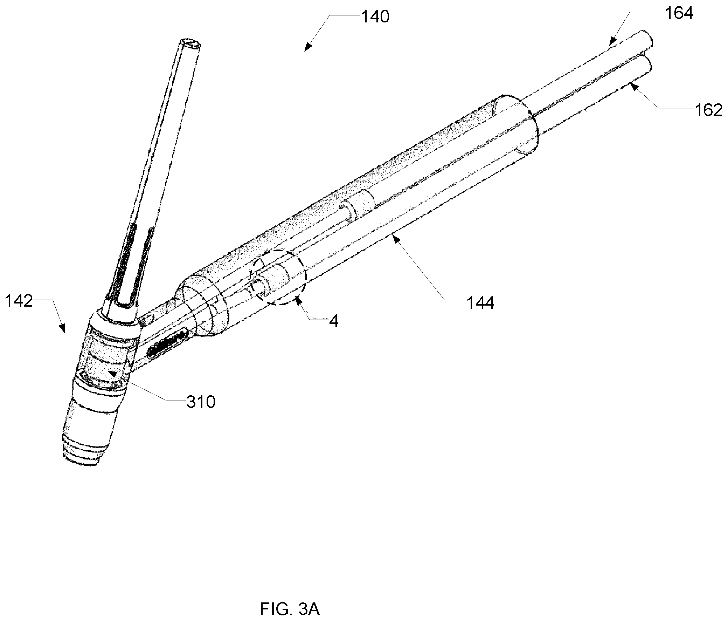

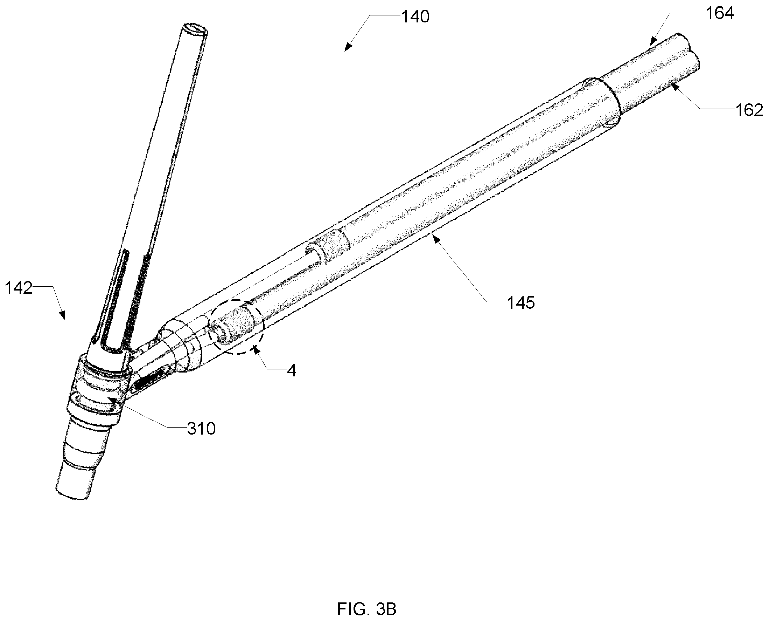

In some examples, the coolant lines 162, 164 and gas line 132 are enclosed in a cable jacket (not shown, but described below with regards to FIG. 5). Example configurations of the coolant lines 162 and 164 and the torch head 142 to provide a thermal path for coolant to cool the torch head 142 are described in FIGs. 3A and 3B.

FIG. 3A is a partially transparent perspective view of an example integrated welding torch of FIG. 1 depicting a pass through cooling configuration. FIG. 3B is a second partially transparent perspective view of an example integrated welding torch of FIG. 1 depicting a wrap-around configuration. The welding torch 140 includes a torch head 142 and a torch handle 144. Coolant lines 162 and 164 run through the torch handle 144 conducting coolant to and from the torch head 142. A gas line (not shown) also runs through the torch handle 144 and provides shielding gas to the torch head 142. In some examples, the both coolant lines 162, 164 include power conductors which run through the coolant lines 162, 164 to the torch head to provide power to the torch head. The power conductors may run through the coolant lines 162, 164. In some examples, coolant line 162 (or coolant line 164) may run coolant from the cooler 120 and/or through the power supply connector 160 to the torch head 142, simultaneously cooling one of the power conductors while providing coolant to the torch head 142. Once the coolant reaches the torch head, the coolant runs back through the torch handle 144 through coolant line 164 (or coolant line 162) to the cooler 120 and/or the power supply connector 160, thereby cooling the other power conductor along the return path through the coolant line 164.

In some examples, the coolant lines 162 and 164 may be arranged in a pass through configuration 210 as illustrated in FIG. 3A, where coolant passes through the torch head 142. In a pass through configuration 210, coolant lines 162 and 164 flow to one or more conduits that pass through one or more coolant passages (not shown, but described with regards to FIG. 4 below) in the torch head 142.

In some other examples, the coolant lines 162 and 164 may be arranged in a wrap-around configuration 310 as depicted in FIG. 3B. In a wrap-around configuration 310, coolant lines 162 and 164 flow to one or more conduits in the shape of a "U" or a loop that is pinched around the torch head 142. The connection 400 between the coolant lines 162 and 164 and the torch head 142 is described in further detail with regards to FIG. 4. The coolant lines 162 and 164 may wrap around the torch head 142 one or more times, in which additional turns around the torch head 142 increase the thermally conductive surface area between the coolant lines 162 and 164 and the torch head 142.

FIG. 4 is a cross-section detailed view of the connection 400 of FIGs. 3A and 3B. The connection 400 may be of coolant line 162 or 164. A power conductor cable 410 runs from the power supply 110 towards the torch head 142 within the coolant line 162, 164 (in the direction of 401, pointing towards the welding torch 140). The connection 400 depicts a power conductor cable 410, conductive tubing 420, a side bore hole 430, and a hose clamp, ferrule 440 or similar device.

The welding power conductor cable 410 may be used to directly connect the coolant lines 162 and 164 to the conductive tubing 420. In some examples, connecting the coolant lines 162 and 164 to the conductive tubing 420 may include coupling the coolant lines to the conductive tubing 420 with, for example, a coupler, a crimp connector, ferrule, or any type of coupler that provides a radial force to secure the coolant line 162 or 164 to the conductive tubing 420 (e.g., a crimped-style fitting, a compression fitting, a threaded compression fitting, etc.). As used herein, a "direct" connection or "directly" connecting refers to connecting two components without an intermediate components between the directly connected components. For example, the coolant lines 162, 164 are directly connected to the conductive tubing by making direct contact with the respective conductive tubing 420, such as to provide a fluid seal, without an intermediate connection or component. As shown, a ferrule 440 is used to secure the welding power conductor cable 410 to the coolant line 162 or 164 by crimping at 412 to form a solid electric connection between the conductive tubing 420 and the welding power conductor cable 410.

The conductive tubing 420 may be inserted into coolant line 162 and/or coolant line 164, such that the welding power conductor cable 410 is inserted a distance into the conductive tubing 420. In some examples, the conductive tubing 420 includes barbed features 422, such as ridges or grooves, to provide a rough surface for gripping.

The power conductor cable 410 may end at a termination point 412 before the side bore hole 430. The ferrule 440 may be used to directly connect the coolant lines 162 or 164 to conductive tubing 420 as described above. In some examples, when the ferrule 440 is placed and the conductive tubing 420 is crimped at 424, the side bore hole 430 is formed that allows coolant to flow into a coolant passage within the conductive tubing 420. By crimping the conductive tubing at 424, coolant is allowed to pass from a space (depicted as 510 in FIG. 5) in the coolant line 162 or 164, which is external to the power conductor cable 410 and within coolant line 162 or 164, through the side bore hole 430 and into the conductive tubing 420 and towards the welding torch 140 in direction 401.

FIG. 5 is a detailed cross-section of the coolant lines 162, 164 and gas line 132 of FIG. 2. In some examples, the two coolant lines 162 and 164 each include a welding power conductor cable 410, and a gas line 132. The gas line 132 and coolant lines 162 and 164 are enclosed in cable jacket 520 which may be placed in the torch handle 144. The gas line 132 provides shielding gas to the torch head 142, while coolant lines 162 and 164 provide coolant towards and away from the torch.

In some examples, coolant line 162 is used to push cold coolant towards the torch head 142, and coolant line 164 is used to return hot coolant away from the torch head 142. In some other examples, coolant line 164 is used to push coolant towards the torch head 142, and coolant line 162 is used to return hot coolant away from the torch head 142.

The welding power conductor cables 410 in the coolant lines 162 and 164 provide electric current to the torch head 142 and are enclosed in a non-conductive material. The welding power conductor cables 410 may provide electric current to the torch head 142 in parallel. Coolant may flow annularly over and around the non-conductive material of the welding power conductor cables 410 in space 510. The coolant may substantially surround the welding power conductors 410 such that the flow of coolant partially or almost completely covers the non-conductive material of the welding power conductor cables 410 when flowing towards and away from the torch head 142, thus providing a greater surface area that is surrounded by the coolant and able to be cooled.

The gas line 132 and coolant lines 162 and 164 may be surrounded by a cable jacket 520. The cable jacket 520 may be made of a material such as PVC (Polyvinyl Chloride), PUR (polyurethane), PE (Polyethylene), or TPE (thermoplastic elastomer) and may include tubing insulation material.

While the present welding torch has been described with reference to certain implementations, it will be understood by those skilled in the art that various changes may be made and equivalents may be substituted without departing from the scope of the present invention as defined in the appended claims.

## Claims

1. A welding torch (140), comprising:
a torch head (142);
a handle comprising:
a first coolant line (162) configured to conduct coolant to the torch head (142);
a second coolant line (164) configured to conduct the coolant away from the torch head (142);
the welding torch (140) being **characterised by**:
a first welding power conductor within the first coolant line (162);
and
a second welding power conductor within the second coolant line (164), the first and second welding power conductors configured to carry electric current to the torch head (142).

2. The welding torch (140) of claim 1, wherein the first and second welding power conductors conduct welding-type current in parallel.

3. The welding torch (140) of claim 1, wherein the first and second coolant lines pass through the torch head (142) in thermal and electrical connection with the torch head (142).

4. The welding torch (140) of claim 1, wherein the first and second coolant lines are fluidly and electrically coupled to the torch head (142) to form a coolant path for the torch head (142), or
wherein the first and second coolant lines wrap around the torch head (142) in thermal and electrical connection with the torch head (142).

5. The welding torch (140) of claim 1, wherein the coolant in the first coolant line (162) substantially surrounds the first welding power conductor, and the coolant in the second coolant line (164) substantially surrounds the second welding power conductor.

6. The welding torch (140) of claim 1, wherein the first coolant line (162), the first welding power conductor, the second coolant line (164), and the second welding power conductor extend from the handle to a power supply (110), and the coolant provides an annular flow surrounding the first and second welding power conductors to cool the first and second welding power conductors from the power supply (110) to the torch head (142).

7. The welding torch (140) of claim 1, wherein the first welding power conductor and the second welding power conductor extend from the handle to a connector, and the coolant provides an annular flow surrounding the first and second welding power conductors to cool the first and second welding power conductors from the connector to the torch head (142), and optionally
wherein the connector comprises input connections for the first coolant line (162), the second coolant line (164), and a welding power cable, and output connections for the first coolant line (162), the second coolant line (164), the first welding power conductor, and
the second welding power conductor.

8. The welding torch (140) of claim 1, wherein the handle further comprises a gas hose (132) configured to provide shielding gas to the welding torch (140).

## Patentansprüche

1. Schweißbrenner (140), aufweisend:
einen Brennerkopf (142);
einen Griff, aufweisend:
eine erste Kühlmittelleitung (162), die eingerichtet ist, Kühlmittel zu dem Brennerkopf (142) zu leiten;
eine zweite Kühlmittelleitung (164), die eingerichtet ist, das Kühlmittel von dem Brennerkopf (142) weg zu leiten;
wobei der Schweißbrenner (140) **gekennzeichnet ist durch**:
einen ersten Schweißstromleiter innerhalb der ersten Kühlmittelleitung (162); und
einen zweiten Schweißstromleiter innerhalb der zweiten Kühlmittelleitung (164), wobei der erste und der zweite Schweißstromleiter so eingerichtet sind, dass sie elektrischen Strom zu dem Brennerkopf (142) führen.

2. Schweißbrenner (140) nach Anspruch 1, wobei der erste und der zweite Schweißstromleiter einen Schweißstrom parallel leiten.

3. Schweißbrenner (140) nach Anspruch 1, wobei die erste und die zweite Kühlmittelleitung durch den Brennerkopf (142) in thermischer und elektrischer Verbindung mit dem Brennerkopf (142) verlaufen.

4. Schweißbrenner (140) nach Anspruch 1, wobei die erste und die zweite Kühlmittelleitung fluidisch und elektrisch mit dem Brennerkopf (142) gekoppelt sind, um einen Kühlmittelpfad für den Brennerkopf (142) zu bilden, oder
wobei sich die erste und die zweite Kühlmittelleitung in thermischer und elektrischer Verbindung mit dem Brennerkopf (142) um den Brennerkopf (142) winden.

5. Schweißbrenner (140) nach Anspruch 1, wobei das Kühlmittel in der ersten Kühlmittelleitung (162) den ersten Schweißstromleiter im Wesentlichen umgibt und das Kühlmittel in der zweiten Kühlmittelleitung (164) den zweiten Schweißstromleiter im Wesentlichen umgibt.

6. Schweißbrenner (140) nach Anspruch 1, wobei sich die erste Kühlmittelleitung (162), der erste Schweißstromleiter, die zweite Kühlmittelleitung (164) und der zweite Schweißstromleiter von dem Griff zu einer Stromversorgung (110) erstrecken, und das Kühlmittel eine ringförmige Strömung bereitstellt, die den ersten und den zweiten Schweißstromleiter umgibt, um den ersten und den zweiten Schweißstromleiter von der Stromversorgung (110) zu dem Brennerkopf (142) zu kühlen.

7. Schweißbrenner (140) nach Anspruch 1, wobei sich der erste Schweißstromleiter und der zweite Schweißstromleiter von dem Griff zu einem Verbinder erstrecken und das Kühlmittel eine ringförmige Strömung bereitstellt, die den ersten und den zweiten Schweißstromleiter umgibt, um den ersten und den zweiten Schweißstromleiter von dem Verbinder zu dem Brennerkopf (142) zu kühlen, und optional
wobei der Verbinder Eingangsverbindungen für die erste Kühlmittelleitung (162), die zweite Kühlmittelleitung (164) und ein Schweißstromkabel und Ausgangsverbindungen für die erste Kühlmittelleitung (162), die zweite Kühlmittelleitung (164), den ersten Schweißstromleiter und den zweiten Schweißstromleiter aufweist.

8. Schweißbrenner (140) nach Anspruch 1, wobei der Griff ferner einen Gasschlauch (132) aufweist, der so eingerichtet ist, dass er Schutzgas an den Schweißbrenner (140) bereitstellt.

## Revendications

1. Chalumeau de soudage (140), comprenant :
une tête de chalumeau (142) ;
une poignée comprenant :
une première conduite de réfrigérant (162) configurée pour conduire le réfrigérant vers la tête de chalumeau (142) ;
une deuxième conduite de réfrigérant (164) configurée pour évacuer le réfrigérant de la tête de chalumeau (142) ;
le chalumeau de soudage (140) étant **caractérisé par** :
un premier conducteur de puissance de soudage à l'intérieur de la première conduite de réfrigérant (162) ; et
un deuxième conducteur de puissance de soudage à l'intérieur de la deuxième conduite de réfrigérant (164), les premier et deuxième conducteurs de puissance de soudage étant configurés pour transporter un courant électrique vers la tête de chalumeau (142).

2. Chalumeau de soudage (140) selon la revendication 1, dans laquelle les premier et deuxième conducteurs de puissance de soudage conduisent un courant de type soudage en parallèle.

3. Chalumeau de soudage (140) selon la revendication 1, dans lequel les première et deuxième conduites de réfrigérant passent à travers la tête de chalumeau (142) en connexion thermique et électrique avec la tête de chalumeau (142).

4. Chalumeau de soudage (140) selon la revendication 1, dans lequel les première et deuxième conduites de réfrigérant sont couplées de manière fluide et électrique à la tête de chalumeau (142) pour former un trajet de réfrigérant pour la tête de chalumeau (142), ou
dans lequel les première et deuxième conduites de réfrigérant s'enroulent autour de la tête de chalumeau (142) en connexion thermique et électrique avec la tête de chalumeau (142).

5. Chalumeau de soudage (140) selon la revendication 1, dans laquelle le réfrigérant dans la première conduite de réfrigérant (162) entoure sensiblement le premier conducteur de puissance de soudage, et le réfrigérant dans la deuxième conduite de réfrigérant (164) entoure sensiblement le deuxième conducteur de puissance de soudage.

6. Chalumeau de soudage (140) selon la revendication 1, dans lequel la première conduite de réfrigérant (162), le premier conducteur de puissance de soudage, la deuxième conduite de réfrigérant (164) et le deuxième conducteur de puissance de soudage s'étendent depuis la poignée jusqu'à une alimentation électrique (110), et le réfrigérant fournit un écoulement annulaire entourant les premier et deuxième conducteurs de puissance de soudage pour refroidir les premier et deuxième conducteurs de puissance de soudage depuis l'alimentation électrique (110) jusqu'à la tête de chalumeau (142).

7. Chalumeau de soudage (140) selon la revendication 1, dans laquelle le premier conducteur de puissance de soudage et le deuxième conducteur de puissance de soudage s'étendent depuis la poignée jusqu'à un connecteur, et le réfrigérant fournit un écoulement annulaire entourant les premier et deuxième conducteurs de puissance de soudage pour refroidir les premier et deuxième conducteurs de puissance de soudage depuis le connecteur jusqu'à la tête de chalumeau (142), et, facultativement
dans lequel le connecteur comprend des connexions d'entrée pour la première conduite de réfrigérant (162), la deuxième conduite de réfrigérant (164) et un câble d'alimentation de soudage, et des connexions de sortie pour la première conduite de réfrigérant (162), la deuxième conduite de réfrigérant (164), le premier conducteur de puissance de soudage et le deuxième conducteur de puissance de soudage.

8. Chalumeau de soudage (140) selon la revendication 1, dans laquelle la poignée comprend en outre un tuyau de gaz (132) configuré pour fournir un gaz de protection au chalumeau de soudage (140).
